# EUROPÄISCHE PATENTANMELDUNG

(11) **EP 1 618 789 A2**
(43) Veröffentlichungstag der Anmeldung: **25.01.2006**
(21) Anmeldenummer: 05015408.7
(22) Anmeldetag: 15.07.2005
(51) Int. Cl.: A23B 4/06, A23L 1/31

(54) **Verfahren zur Herstellung von verkaufsfertigen Portionen aus frischem Fleisch**

(30) Priorität: 15.07.2004 DE 102004034346
(71) Anmelder: Diercks & Hennings Fleischhandelsgesellschaft mbH Import-Export, 53842 Troisdorf-Spich (DE)
(72) Erfinder: Eversmann, Philip N., 53639 Königswinter (DE)
(74) Vertreter: Wanischeck-Bergmann, Axel

(57) **Zusammenfassung**

Die Erfindung betrifft ein Verfahren zur Herstellung von verkaufsfertigen Portionen aus frischem Fleisch, bei dem ein das frische Fleisch lieferndes Tier, insbesondere ein Rind, vorzugsweise ein Ochse, unmittelbar nach seinem Exitus in Bestandteile, insbesondere Viertel zerlegt wird, die Bestandteile einen, einen Reifeprozess des Fleisches einleitenden Zeitraum und zur Auskühlung abgehängt und anschließend entbeint werden. Damit die Fleischprodukte dem Einzelhandel mit den gewünschten Qualitätsmerkmalen kostengünstig angeboten werden können, ist vorgesehen, dass das von Knochen und gegebenenfalls von Fettgewebe befreite frische Fleisch in verkaufsfertige Portionen aufgeteilt und die verkaufsfertigen Portionen portionsweise in Folienverpackungen verpackt und schließlich unmittelbar oder mittelbar per Schiff und/oder Flugzeug, vorzugsweise über zumindest 12 Stunden gekühlt transportiert werden, wobei der Reifeprozess des Fleisches während des Transports fortgesetzt und die verkaufsfertigen Portionen in den Folienverpackungen an den Einzelhandel ausgeliefert werden.

## Beschreibung

Die Erfindung betrifft ein Verfahren zur Herstellung von verkaufsfertigen Portionen aus frischem Fleisch, insbesondere aus Rindfleisch, bei dem ein das frische Fleisch lieferndes Tier, insbesondere ein Rind, vorzugsweise ein Ochse, unmittelbar nach seinem Exitus in Bestandteile, insbesondere Viertel zerlegt wird, die Bestandteile, insbesondere die Viertel einen, einen Reifeprozess des Fleisches einleitenden Zeitraum und zur Auskühlung abgehängt und anschließend entbeint werden.

Fleischprodukte werden üblicherweise in Supermärkten oder anderen Einzelhandelsgeschäften, insbesondere Metzgereien geschlachtet und verpackt. Es ist seit langem bekannt, dass eine derartige Vorgehensweise sehr kostenintensiv und damit unwirtschaftlich ist. In zunehmendem Maße ist der Einzelhandel dazu übergangen, Fleisch in wirtschaftlich arbeitenden Großunternehmen derart vorbereiten zu lassen, dass in den Einzelhandelsgeschäften lediglich noch ein Portionieren des Fleisches unmittelbar vor der Abgabe an einen Kunden erfolgt. Derartige Großunternehmen profitieren von den Kostenersparnissen bei einer Massenproduktion, wobei die Dienstleistungen derartiger Großunternehmen nicht nur das Schlachten der Tiere, sondern auch das Verpacken der Waren sowie den Transport der verpackten Waren zu den Einzelhandelsgeschäften und Supermärkten abdeckt.

Diese Vorgehensweise führte lange Zeit nicht zu dem erwünschten wirtschaftlichen Erfolg, da die Verbraucher den Erwerb von Fleisch bevorzugen, das von seiner Farbgebung rot ausgebildet ist. Die Rotfärbung des Fleisches ist als ein Resultat eines Reifeprozesses anzusehen, bei dem das Fleisch über einen bestimmten Zeitraum dem in der Umgebungsluft enthaltenen Sauerstoff ausgesetzt ist. Das Fleisch behält seine Rotfärbung aber lediglich für ein oder zwei Tage und verändert seine Färbung anschließend in Richtung dunkelviolett (purpur). Diese Farbgebung wird vom Verbraucher als unerwünscht angesehen, da er mit dieser Farbgebung nicht das Attribut "frisch" verbindet. Aus diesem Grunde ist die Massenproduktion für den wirtschaftlichen Erfolg des Verkaufs des Fleisches nachteilig, da eine Schlachtung und Verpackung des Fleisches einem Transport vorangeht, welcher Transport in der Regel logistisch und insbesondere bei zunehmendem Transportweg nicht in einer derart kurzen Zeit durchgeführt werden kann, dass die erwünschte Farbgebung des Fleisches erhalten bleibt.

Um diese Probleme zu überwinden, gab es in der Vergangenheit eine Vielzahl von Anstrengungen, die insbesondere vorsehen, dass das Fleisch während des Transports in einer bestimmten ersten Atmosphäre aufbewahrt wird, in der der Reifeprozess des Fleisches verlangsamt wird. Während des Verkaufs bzw. unmittelbar vor dem Angebot des Fleisches wird dieses in einer zweiten Atmosphäre aufbewahrt, in der das Fleisch die gewünschte Rotfärbung annimmt. Trotz der Vielzahl von Versuchen konnte keine Technologie gefunden werden, bei der eine signifikante kommerzielle Akzeptanz eines derartigen Fleisches erreicht wird.

Die voranstehend dargestellten Probleme sind insbesondere bei längeren Transportwegen evident. So ist zwischen lokal produziertem Fleisch und an vom Verbraucher entfernt gelegenen Orten produziertem Fleisch zu unterscheiden. In zunehmendem Maße wird die Fleischqualität von Umwelteinflüssen beeinträchtigt. Die Verbraucher verlangen daher zunehmend nach Fleisch, welches in Ländern produziert wird, die aufgrund ihrer Umweltbedingungen ein mit möglichst geringen Umweltgiften belastetes Fleisch produzieren können. Klassische Produktionsländer mit derart vorteilhaften Bedingungen sind Uruguay, Argentinien und Brasilien bzw. andere südamerikanische Länder. Hierbei spielen insbesondere hormon- und BSE-freies Fleisch ohne Zusatzfutter eine bedeutende Rolle.

Als nahezu größtes Erzeugerland für Rindfleisch weist Brasilien eine üppige Fauna eines tropischen Klimas auf, welche sich als ideal für die Aufzucht von Rinder erwiesen hat. In gleicher Weise weist Argentinien eine sehr große landwirtschaftliche Nutzfläche in Form von Weideland auf, wobei ebenfalls optimale klimatische und biologische Voraussetzungen für die Rinderzucht vorgefunden werden. Der Transport der in diesen südamerikanischen Ländern erzeugten Fleischprodukte ist aber zeitintensiv und aufwendig. Letztendlich besteht bei einem Transport der Fleischprodukte aus diesen südamerikanischen Ländern nach Europa oder in die Vereinigten Staaten ein Zeitbedarf von zumindest zwölf Stunden, wenn der Transport per Flugzeug erfolgt. Größere Mengen der Fleischprodukte werden aber auf dem Seeweg in speziellen Kühlcontainern transportiert.

Hierbei ist eine übliche Vorgehensweise das Schlachten der Rinder nach ihrem Exitus, bei dem die Rinder in Viertel zerlegt werden. Diese Viertel werden sodann für einen bestimmten Zeitraum abgehängt, in dem ein Reifeprozess und das Auskühlen des Fleisches eingeleitet wird. Das Resultat dieses Reifeprozesses ist die erwünschte Rotfärbung des Fleisches, die offensichtlich die Qualitätsansprüche der Verbraucher in besonderem Maße anspricht. Nach dem Abhängen werden die Viertel entbeint, bevor das von Knochen und gegebenenfalls von Fettgewebe befreite Fleisch verpackt und in die Verbraucherländer transportiert wird. Hierbei sind zwei Möglichkeiten gegeben, nämlich das Fleisch in gefrorenem Zustand oder in nicht gefrorenem Zustand zu transportieren, wobei der letztgenannte Zustand als Transport von frischem Fleisch bezeichnet wird.

In den Verbraucherländern angekommen, werden die verpackten Fleischprodukte ausgepackt und für den Einzelhandel portioniert. Die einzelnen verkaufsfertigen Portionen werden sodann erneut in Folienverpackungen verpackt und an den Einzelhandel ausgeliefert.

Der Nachteil dieser Vorgehensweise liegt eindeutig darin, dass die Fleischprodukte zumindest zweimal verpackt werden müssen, so dass die Fleischprodukte auch zumindest zweimal einem Zutritt von Sauerstoff ausgesetzt werden, die den beim Abhängen eingeleiteten Reifeprozess beschleunigt fortführen, wodurch die erwünschte Rotfärbung in eine Purpurfärbung übergeht, so dass das gewünschte Qualitätsmerkmal der Rotfärbung des Fleisches verloren geht. Die Purpurfärbung stellt sich hierbei bereits nach drei bis fünf Tagen nach der Entnahme der Fleischprodukte aus der Erstverpackung ein, so dass nur entsprechend kurze Haltbarkeitsdaten verwendet werden können. Dieser Prozess der Verfärbung lässt sich nicht mehr unterbrechen.

Um diese Nachteile zu vermeiden sind im Stand der Technik eine Vielzahl von Verpackungen für frisches rotes Fleisch bekannt. Diese Verpackungen sollen sicherstellen, dass das Fleisch in einer Atmosphäre mit niedrigem Sauerstoffgehalt transportiert wird, d.h., dass der Transport vorzugsweise bei einem Sauerstoffgehalt von < 0,5% O₂ erfolgt. Hierdurch soll der Reifeprozess für den Zeitraum des Transports verlangsamt werden, so dass erst beim Öffnen der Verpackung und dem erneuten Einwirken des Sauerstoffs der Reifeprozess fortgeführt und das Fleisch mit Rotfärbung im Einzelhandel angeboten wird.

Aus dem Stand der Technik ist es bekannt, dass die großstückigen Fleischprodukte im Einzelhandel zerteilt und verpackt werden. Diese Vorgehensweise ist jedoch unwirtschaftlich und führt zu hohen zusätzlichen Kosten. Die Handhabung der großstückigen Fleischprodukte führt nämlich zum einen dazu, dass die aus den großstückigen Fleischprodukten portionierten Fleischprodukte im wesentlichen gleichzeitig an die Verbraucher abgegeben werden müssen, um die vom Verbraucher als vorteilhaft angesehenen visuellen Qualitätsmerkmale der Rotfärbung zu erhalten. Andererseits ist es bei dieser Vorgehensweise nachteilig, dass die Fleischprodukte an unterschiedlichen Stellen hinsichtlich der Verarbeitung gehandhabt werden müssen, so dass die Gefahr der Verunreinigung der Fleischprodukte durch Bakterien oder andere Krankheitskeime in zunehmenden Maße besteht.

Ebenfalls bekannt sind Verpackungen für Fleischprodukte, die eine innere sauerstoffdurchlässige Folie und eine äußere sauerstoffundurchlässige Folie aufweisen, wobei die Verpackung entweder mit Gas gespült oder evakuiert wird. Unmittelbar vor der Vermarktung der Fleischprodukte wird bei dieser Verpackung die äußere sauerstoffundurchlässige Folie entfernt und das Fleischprodukt ausschließlich in der inneren sauerstoffdurchlässigen Folie präsentiert. Da die innere sauerstoffdurchlässige Folie das Hinzutreten von Sauerstoff ermöglicht, blüht das Fleischprodukt auf und erhält die vom Verbraucher als positiv angesehene Rotfärbung. Mit dieser Rotfärbung assoziiert der Verbraucher die von ihm gewünschte Frische des Fleischprodukts. Die sauerstoffdurchlässige Folie der Verpackung ist als Polyethylenfolie ausgebildet, während die äußere saustoffundurchlässige Folie als Cellophanfolie mit einer Saranbeschichtung (Vinylidenchloridcopolymere) ausgebildet ist.

Das Aufblühen des Fleischproduktes kann auch durch das Spülen mit Sauerstoff beschleunigt werden.

Ausgehend von diesem Stand der Technik liegt der Erfindung die **Aufgabe** zugrunde, ein gattungsgemäßes Verfahren zur Herstellung von verkaufsfertigen Portionen aus frischem Fleisch, insbesondere aus Rindfleisch zu schaffen, bei dem die voranstehenden Nachteile des Standes der Technik vermieden werden und insbesondere die Fleischprodukte dem Einzelhandel mit den gewünschten Qualitätsmerkmalen kostengünstig angeboten werden können.

Die **Lösung** dieser Aufgabenstellung sieht bei einem gattungsgemäßen Verfahren vor, dass das von Knochen und gegebenenfalls von Fettgewebe befreite frische Fleisch in verkaufsfertige Portionen aufgeteilt und die verkaufsfertigen Portionen portionsweise in Folienverpackungen verpackt und schließlich unmittelbar oder mittelbar per Schiff und/oder Flugzeug, vorzugsweise über zumindest zwölf Stunden gekühlt transportiert werden, wobei der Reifeprozess des Fleisches während des Transports fortgesetzt und die verkaufsfertigen Portionen in den Folienverpackungen an den Einzelhandel ausgeliefert werden.

Der wesentliche Gedanke der Erfindung liegt also darin, das frische Fleisch nach dem Abhängen und Entbeinen portionsgerecht aufzuteilen und portionsgerecht zu verpacken, wobei der Reifeprozess des Fleisches während des Transports fortgesetzt wird. Hierbei soll der Reifeprozess selbstverständlich nur mit einer Geschwindigkeit ablaufen, die es ermöglicht, das Fleisch mit den erwünschten Qualitätsmerkmalen, nämlich der Rotfärbung unverzüglich dem Einzelhandel auszuliefern. Das erfindungsgemäße Verfahren vermeidet somit ein erneutes Auspacken der großstückigen Fleischprodukte, um die großstückigen Fleischprodukte portionsgerecht aufzuteilen. Hierdurch wird eine wesentliche Verlängerung der Haltbarkeit der frischen Fleischprodukte erzielt, die zu logistischen Vorteilen bei Groß- und Einzelhandel aber auch beim Endverbraucher führt. Haltbarkeiten von zumindest zwei Monaten werden hierdurch erzielbar.

Erfindungsgemäß ist es daher als vorteilhaft anzusehen, die Aufteilung des Fleisches in für den Verbraucher geeignete Portionen zeitnah an die ursprüngliche Produktion des Fleischproduktes anzuschließen. Um das erfindungsgemäße Verfahren erfolgreich durchführen zu können, ist daher eine Verpackung für frisches Fleisch anzuwenden, die den Reifeprozess des Fleisches im wesentlichen verlangsamt. Eine solche Verpackung ist beispielsweise aus der DE 695 11 480 T2 bekannt. Weiterhin wird hinsichtlich derartiger Verpackungen auf die DE 696 23 462 T2 bzw. die DE 694 33 041 T2 verwiesen.

Gemäß einer Weiterbildung des erfindungsgemäßen Verfahrens ist vorgesehen, dass das frische Fleisch über einen Zeitraum von 24 Stunden bei einer Temperatur von über 2°C abgehängt wird. Diese Vorgehensweise führt zu einer optimalen Auskühlung des Fleisches während des Abhängens und zu einem Reifeprozess. Durch die unverzüglich erfolgende Portionierung des frischen Fleisches und die damit verbundene Verpackung des frischen Fleisches kann der Reifeprozess über einen relativ langen Zeitraum ausgedehnt bzw. verlangsamt werden, so dass auch ein längerer Transportweg nicht dazu führt, dass die visuellen Qualitätsmerkmale des frischen Fleisches verloren gehen.

Vorzugsweise weist das frische Fleisch während des Abhängens einen ph-Wert von unter 6 auf, der nach dem Reifeprozess und vor dem Entbeinen im Muskel Longissimus dorsi, vorzugsweise elektronisch gemessen wird. Auch dieses erfindungsgemäße Merkmal dient dem optimalen Reifeprozess des Fleisches, der für den nachfolgenden Transport konserviert wird.

Nach einem weiteren Merkmal der Erfindung ist vorgesehen, dass die entbeinten Bestandteile, insbesondere die entbeinten Viertel auf eine Temperatur unterhalb von 0°C, insbesondere auf eine Temperatur zwischen -0,5°C und -3°C, vorzugsweise auf -1°C gekühlt werden, bevor die entbeinten Bestandteile portioniert werden. In diesem Temperaturbereich ist das frische Fleisch in besonderer Weise portionierbar, da sich das Aufschneiden des Fleisches, welches manuell oder maschinell erfolgt, aufgrund Konsistenz des Fleisches vereinfacht ausführen lässt. Vorzugsweise werden die entbeinten Bestandteile maschinell schneidend portioniert, wobei vorzugsweise ein Laserstrahl zum Schneiden verwendet wird.

Die voranstehend erwähnte Kühltemperatur hat darüber hinaus keinen Nachteil auf die Frischhaltung des Fleisches. Insbesondere ist darauf hinzuweisen, dass man bei einer Kühlung des Fleisches auf diesen Temperaturbereich noch nicht von gefrorenem Fleisch spricht, so dass das Fleisch weiterhin als frisches Fleisch bezeichnet und geliefert wird.

Der Transport des Fleisches erfolgt nach einem weiteren Merkmal der Erfindung vorzugsweise bei einer Temperatur von 0°C. Das Verpacken des portionierten Fleisches erfolgt bei einer Temperatur des Fleisches von 0°C.

Weiterhin ist vorgesehen, dass das Gewicht des portionierten Fleisches unmittelbar nach dem Portionieren und vor dem Verpacken gemessen wird. Eventuelle Unregelmäßigkeiten bei dem Gewicht des portionierten Fleischproduktes können somit noch vor dem Verpacken ausgeglichen werden. Hierbei handelt es sich in der Regel um Fleischprodukte mit zu hohem Gewicht, die durch Entfernung von Fleischbestandteilen oder Fettbestandteilen auf das erforderliche Gewicht gebracht werden.

Das Portionieren des Fleischproduktes wird zwölf, insbesondere 24 bis 48 Stunden nach dem Exitus des Tieres, vorzugsweise unmittelbar nach dem Entbeinen durchgeführt. Die voranstehend genannte Zeitspanne wird für das Abhängen, das Auskühlen und den Beginn des Reifeprozesses genutzt.

Es ist nach einem weiteren Merkmal der Erfindung vorgesehen, dass das portionierte Fleisch während des Verpackens in eine vom Verbraucher als für ein Steak typische Form geformt wird, wobei das Formen des portionierten Fleischproduktes durch einen Verpackungsvorgang erfolgt, bei dem das portionierte Fleischprodukt in eine Folienverpackung aus einer Tiefziehfolie verpackt wird und ein Foliendeckel auf die Tiefziehfolie aufgebracht und mit dieser luftdicht verbunden wird.

Erfindungsgemäß ist vorgesehen, dass die portionierten Fleischprodukte auf einen Folienstreifen aufgelegt werden, welcher Folienstreifen sodann über eine Tiefziehvorrichtung geführt wird, in der der Folienstreifen mit dem portionierten Fleischprodukt in eine Form gezogen und anschließend mit einer oberen Folie verbunden wird. Durch das Formen der Tiefziehfolie mit dem Fleisch wird gleichzeitig die gegebenenfalls in der Verpackung enthaltene Umgebungsluft entfernt, so dass eine nur geringe Sauerstoffmenge vorhanden ist, die den Reifeprozess aber nicht wesentlich fortführen kann.

Ein derart endlos hergestellter Folienstreifen aus schalenförmigen unteren, die frischen und portionierten Fleischprodukte aufnehmenden Elementen und den Foliendeckeln wird sodann in einzelne Verpackungseinheiten aufgeteilt.

Vorzugsweise wird das portionierte Fleischprodukt in eine Folienverpackung mit geringer Luftdurchlässigkeit verpackt, wobei die Folienverpackung insbesondere mit einer Luftdurchlässigkeit von weniger als 5 cm³/m² über 24 h bei einem bar Luftdruck und 23°C Lufttemperatur aufweist.

Es ist nach einem weiteren Merkmal der Erfindung vorgesehen, dass auf die Folienverpackungen vor der Auslieferung an den Einzelhandel Etiketten angeordnet werden, um beispielsweise abnehmerbezogene Informationen auf den Verpackungen anzuordnen.

Schließlich ist vorgesehen, dass das frische Fleisch aus der Hüfte, dem Filet, den Keulenteilen und/oder dem Zwischenrückenstück (Entrecöte, Roastbeef) des Tieres entnommen wird.

Weitere Merkmale und Vorteile der Erfindung ergeben sich aus dem nachfolgendem Ausführungsbeispiel:
Ein getöteter Ochse wird unmittelbar nach seinem Exitus in Viertel aufgeteilt und für 24 Stunden bei einer Temperatur von 3°C abgehängt. In diesen 24 Stunden, während die Viertel auskühlen, beginnt ein Reifeprozess des Fleisches, in dem das Fleisch eine Rotfärbung annimmt.

Nach dem Abhängen werden die Viertel entbeint, d.h. von Knochen und gegebenenfalls von Fettgewebe befreit. Für die weitere Verarbeitung des frischen Fleisches werden sodann Fleischstücke aus den Vierteln entnommen, wie beispielsweise Hüfte, Entrecöte, Filet und/oder Keulenteile. Das Hüftfleisch wird als Steakfleisch und das Fleisch aus den Rippen als Entrecöte oder Roastbeef verarbeitet. Hierbei weisen die entnommenen Fleischstücke Stückgewichte zwischen 1,8 kg und 2,2 kg bei Entnahme aus der Hüfte, 1,6 kg und 2,5 kg bei Entnahme als Filet, 1,8 kg und 2,2 kg beim Entrecöte sowie 3,5 kg und 6,0 kg bei Entnahme aus den Rippen als Roastbeef auf.

Diese großstückigen Fleischprodukte werden sodann bei einer Temperatur von 0°C (Fleischtemperatur) maschinell in verkaufsfertige Portionen geschnitten und hinsichtlich ihres Gewichtes geprüft. Unmittelbar nach dem Aufteilen in verkaufsfertige Portionen werden diese Portionen in Folienverpackungen aus einer Tiefziehfolie und einem auf die Tiefziehfolie aufgebrachten und mit dieser luftdicht verbundenen Foliendeckeln verpackt. Anschließend werden die einzelnen Folienverpackungen in Kartons aus Cellulose verpackt und auf 0°C gekühlt. Der Transport der befüllten Kartons erfolgt dann per Flugzeug oder in einem Kühlcontainer auf dem Seeweg nach Europa oder in die Vereinigten Staaten. Schließlich werden die bereits nach dem Entbeinen verkaufsfertig portionierten Fleischprodukte an den Einzelhandel ausgeliefert, von wo aus die Fleischprodukte den Endabnehmer erreichen, ohne dass ein weiterer Verpackungsvorgang erforderlich ist.

## Patentansprüche

1. Verfahren zur Herstellung von verkaufsfertigen Portionen aus frischem Fleisch, (insbesondere aus Rindfleisch), bei dem ein das frische Fleisch lieferndes Tier, (insbesondere ein Rind, vorzugsweise ein Ochse), unmittelbar nach seinem Exitus in Bestandteile, (insbesondere Viertel) zerlegt wird, die Bestandteile, insbesondere die Viertel) einen, einen Reifeprozess des Fleisches einleitenden Zeitraum und zur Auskühlung abgehängt und anschließend entbeint werden, bevor das von Knochen und gegebenenfalls von Fettgewebe befreite frische Fleisch in verkaufsfertige Portionen aufgeteilt und die verkaufsfertigen Portionen portionsweise in Folienverpackungen verpackt und schließlich unmittelbar oder mittelbar per Schiff und/oder Flugzeug, vorzugsweise über zumindest 12 Stunden gekühlt transportiert werden, wobei der Reifeprozess des Fleisches während des Transports fortgesetzt und die verkaufsfertigen Portionen in den Folienverpackungen an den Einzelhandel ausgeliefert werden.

2. Verfahren nach Anspruch 1,
**dadurch gekennzeichnet,**
**dass** das frische Fleisch über einen Zeitraum von 24 Stunden bei einer Temperatur von über 2°C abgehängt wird.

3. Verfahren nach Anspruch 1,
**dadurch gekennzeichnet,**
**dass** das frische Fleisch während des Abhängens einen pH-Wert von unter 6 aufweist, der nach dem Reifeprozess und vor dem Entbeinen im Muskel Longissimus dorsi, vorzugsweise elektronisch gemessen wird.

4. Verfahren nach Anspruch 1,
**dadurch gekennzeichnet,**
**dass** die entbeinten Bestandteile, insbesondere die entbeinten Viertel auf eine Temperatur unterhalb von 0°C, insbesondere auf eine Temperatur zwischen -0,5°C und -3°C , vorzugsweise auf -1°C gekühlt werden, bevor die entbeinten Bestandteile portioniert werden.

5. Verfahren nach Anspruch 1,
**dadurch gekennzeichnet,**
**dass** die entbeinten Bestandteile maschinell schneidend portioniert werden, wobei vorzugsweise ein Laserstrahl zum Schneiden verwendet wird.

6. Verfahren nach Anspruch 1,
**dadurch gekennzeichnet,**
**dass** der Transport bei einer Temperatur des Fleisches von 0°C durchgeführt wird.

7. Verfahren nach Anspruch 1,
**dadurch gekennzeichnet,**
**dass** das Verpacken des portionierten Fleisches bei einer Temperatur von 0°C durchgeführt wird.

8. Verfahren nach Anspruch 1,
**dadurch gekennzeichnet,**
**dass** das Gewicht des portionierten Fleisches unmittelbar nach dem Portionieren und vor dem Verpacken gemessen wird.

9. Verfahren nach Anspruch 1,
**dadurch gekennzeichnet,**
**dass** das Portionieren 12, insbesondere 24 bis 48 Stunden, vorzugsweise unmittelbar nach dem Entbeinen, nach dem Exitus des Tieres durchgeführt wird.

10. Verfahren nach Anspruch 1,
**dadurch gekennzeichnet,**
**dass** das portionierte Fleisch vor dem Verpacken in eine für ein Steak typische Form geformt wird.

11. Verfahren nach Anspruch 1,
**dadurch gekennzeichnet,**
**dass** das portionierte Fleisch in eine Folienverpackung aus einer Tiefziehfolie verpackt wird, wobei ein Foliendeckel auf die Tiefziehfolie aufgebracht und mit dieser luftdicht verbunden wird.

12. Verfahren nach Anspruch 1,
**dadurch gekennzeichnet,**
**dass** das portionierte Fleisch in eine Folienverpackung mit geringer Luftdurchlässigkeit, insbesondere mit einer Luftdurchlässigkeit von weniger als 5 cm³/m² über 24 h bei einem bar Luftdruck, 23°C Lufttemperatur verpackt wird.

13. Verfahren nach Anspruch 1,
**dadurch gekennzeichnet,**
**dass** auf die Folienverpackungen vor der Auslieferung an den Einzelhandel Etiketten angeordnet werden.

14. Verfahren nach Anspruch 1,
**dadurch gekennzeichnet,**
**dass** das frische Fleisch aus der Hüfte, dem Filet, den Keulenteilen und/oder dem Zwischenrückenstück (Entrecöte, Roastbeef) des Tieres entnommen wird.
